# EUROPEAN PATENT SPECIFICATION

(11) **EP 4 591 430 B1**
(45) Date of publication and mention of the grant of the patent: **18.11.2026**
(21) Application number: 23801808.9
(22) Date of filing: 19.09.2023
(51) Int. Cl.: H02S 40/42, F24T 10/10

(54) **A SOLAR PANEL SYSTEM AND A MOUNTING ARRANGEMENT IN A SOLAR PANEL SYSTEM**
SOLARPANEELSYSTEM UND MONTAGEANORDNUNG IN EINEM SOLARPANEELSYSTEM
SYSTÈME DE PANNEAUX SOLAIRES ET AGENCEMENT DE MONTAGE DANS UN SYSTÈME DE PANNEAUX SOLAIRES

(30) Priority: 22.09.2022 FI 20225821
(43) Date of publication of application: 30.07.2025
(73) Proprietor: FF-Future Oy, 24100 Salo (FI)
(72) Inventor: NIEMINEN, Henri, 24130 Salo (FI)
(74) Representative: Berggren Oy
(86) International application number: PCT/FI2023/050530
(87) International publication number: WO 2024/062158

(56) References cited:
- WO-A1-2015/046231
- CN-U- 208 751 059
- DE-A1- 102008 052 597
- US-A1- 2019 356 264

## Description

### Field of the invention

The invention relates in accordance with the appended claims to a solar panel system and a mounting arrangement for mounting solar panels and thermal insulation materials in a solar panel system.

### Background of the invention

In solar panel systems, solar radiation also heats the solar panels. As the temperature of the solar panel rises, the power produced by the solar panel decreases. Consequently, a weakness of solar panels is the fact that the efficiency of the solar panel decreases as the temperature of the solar panel rises. The efficiency of solar panels varies according to the temperature of the solar cell array. The higher the temperature of the solar panel, the lower the efficiency of the solar panel. To achieve the best efficiency, the solar panel should be as cool as possible. The efficiency of solar panels is typically given at a temperature of 25°C. It is typical of solar cell materials that the power output decreases if the operating temperature of the solar cells rises above 25°C. Keeping the operating temperature lower than the above-mentioned temperature improves the power output of the solar panel. Depending on the location of the solar panels and the weather conditions, the temperature of solar panels may rise to several tens of degrees Celsius. Therefore, cooling the solar panels can significantly improve their efficiency. Even a slight increase in the efficiency has a great effect on the annual energy output, particularly of large solar power plants.

The temperature of solar panels can be decreased by various methods. Typically, solar panels are installed with sufficient air space in view of cooling the cell array, whereby the cell array of the solar panels can be cooled by the airflows. For example, when the panels are slightly elevated off the base, air can flow freely underneath the solar panels. The solar panels may also be provided with cooling elements for collecting heat from the solar panel and for releasing it to the environment. Such cooling elements are typically attached to the solar panel.

In addition to decreasing the efficiency of the solar panels, high temperatures or temperature variations are a burden to the components of the solar panel, resulting in breaking down of components and shortening the service life of the solar panels.

In large solar panel systems, several solar panels have been connected in series. In that case, cooling the solar panels evenly is essential for achieving the best efficiency so that the temperature difference between the solar panels is as low as possible.

The patent publication CN 208 751 059 presents the solar system that is a part of the building energy system. In the presented system, the solar energy is used as an auxiliary heating method. The system also comprise the heating or cooling pipeline arranged on the ground.

### Object and description of the invention

An object of the present invention is to provide a solar panel system by means of which the solar panels in the solar panel system can be cooled in an easy and cost-efficient way and as evenly as possible throughout the whole solar panel system, whereby the temperature difference between the solar panels is as low as possible. Furthermore, an aim of the present invention is to make possible to install solar panels easily directly on the ground, whereby even large solar power plants with cooling systems can be built in an easy and cost-efficient way.

To achieve these aims, the solar panel system and the mounting arrangement for mounting solar panels according to the invention are primarily characterised in what will be presented in the present claims.

A typical solar panel system according to the invention comprises
- solar panels arranged in the ground on the ground surface,
- thermal insulation material arranged to at least some of the interspaces between the solar panels in the ground on the ground surface, wherein solar panels and thermal insulation materials alternate in the solar panel system in parallel with the ground surface, and
- a cooling pipework to cool the solar panels, which cooling pipework is arranged in the ground beneath the solar panels and thermal insulation material, which cooling pipework is provided with a cooling medium circulation,
and in which solar panel system the cooling pipework is arranged in such a manner that the cooling pipework comprises pipes arranged close to the ground surface at the point of location of the solar panels or attached to the surface of the solar panel, which is facing the ground surface, and at the point of location of the thermal insulation material the pipes are arranged substantially deeper in the ground, whereby the depth of the pipe belonging to the cooling pipework varies in the ground in the direction of the surface of the solar panel system, where solar panels and thermal insulation materials alternate.

In a typical solar panel system according to the invention, comprising
- solar panels arranged in the ground on the ground surface,
- thermal insulation materials arranged to at least some of the interspaces between the solar panels in the ground on the ground surface, wherein solar panels and thermal insulation materials alternate in the solar panel system in parallel with the ground surface, and
- a cooling pipework to cool the solar panels, which cooling pipework is arranged in the ground beneath the solar panels and thermal insulation material, which cooling pipework is provided with a cooling medium circulation,
solar panels and thermal insulation material are mounted using a mounting arrangement wherein solar panels are mounted to the pipes of the cooling pipework and thermal insulation materials are mounted in place by the pipes of the cooling pipework running above their surface.

The solar panel system according to the invention is based on installing the solar panels directly onto the ground, whereby no space is left between the ground surface and the solar panels for air to flow at the back side of the panels, but the cooling is provided by using the soil bed in which the solar panels are directly installed. In the system according to the invention, a cooling pipework is arranged on the ground beneath the solar panels, and the ground is used as an element for cooling the solar panels. Furthermore, a solar panel system according to the invention comprises thermal insulation material arranged in the interspaces between the solar panels, the thermal insulation material functioning as an insulating material between the soil and the outside air. The surface of the solar panel system according to the invention comprises solar panels and thermal insulation material alternating in the width or length direction of the surface. In the solution according to the invention, the cooling pipework is arranged on the ground so that the cooling pipework comprises pipes arranged close to the ground surface at the point of location of the solar panels or attached to the surface of the solar panel, which is facing the ground surface, and at the point of location of thermal insulation materials the pipes are arranged substantially deeper in the ground, wherein the depth of the pipe of the cooling pipework in the ground varies in the width- or length direction of the surface of the solar panel system, wherein solar panels and thermal insulation materials alternate. By installing the pipes of the cooling pipework according to the invention, the solar panels can be efficiently cooled throughout the whole area of the solar panel system. When the cooling pipework is arranged deeper in the ground in the area between the solar panels, i.e. in the area of the thermal insulation material arranged between the solar panels, the temperature of the cooling medium in the cooling pipework can be decreased, and thus the cooling is more efficient for the next solar panel. With the arrangement in the system according to the invention, a group of solar panels connected in series can be cooled as evenly as possible, whereby temperature differences between the solar panels are as small as possible and the output of the system can thus be improved. Pipes of the cooling pipework can be arranged side by side at a distance from each other, for example two or more in the area of one solar panel, whereby cooling is evenly spread and as efficient as possible. Typically, there are one or more pipes of the cooling pipework at the point of location of each solar panel, and thus there can be several pipes in the system side by side, whereby the depth of the pipe of the cooling pipework alternates in the width or length direction of the solar panels system, where solar panels and thermal insulation materials alternate.

In the system according to the invention, thermal insulation materials on the ground surface help to keep the soil layer cool when the system is cooled by the cooling circulation, and furthermore, heat can be released from the cooling circulation by means of the pipes of the cooling pipework and/or the thermal distribution boards arranged for the thermal insulation material. The cooling of the solar panel system according to the invention is based on the use of the soil layer beneath the solar panels as a heat accumulator to which heat is transferred during the daytime, and during night time heat is released from the soil layer via components of the cooling pipework arranged on the ground surface whereby the soil layer is cooled again and functions as an element for cooling the solar panels. In the solar panel system according to the invention, solar panels are cooled with a method, whereby
- the solar panels are cooled by circulating the cooling medium in the cooling pipework arranged beneath the solar panels on the ground, when the solar panels are to be cooled during their operation, and
- the cooling medium is arranged to circle in the cooling pipes on the ground surface when heat is to be released from the cooling medium circulation.

In the system according to the invention, thermal insulation materials and solar panels have high vapour resistance whereupon the solar panel system according to the invention also prevents moisture from evaporating from the soil. Consequently, the ground beneath the solar panel system stays cool. In an exemplary embodiment, solar panels and thermal insulation materials can be installed slightly tilted on the ground, whereby rainwater can more easily flow to the ground underneath of the system and this way moisture is captured in the ground beneath the system and absorbed deeper in the soil. Moisture in the soil cools the soil and hence improves the output of the solar panels. In an embodiment of the invention, the solar panel system can be separately watered, whereby water ends up beneath the solar panels and the thermal insulation materials increasing the cooling of the soil and thus improving the output of the solar panels.

The system according to the invention enables efficient cooling of the solar panels, thus improving their efficiency and service reliability. The system according to the invention enables substantially uniform cooling of the solar panels both over the whole surface area of the solar panel and over the whole area of the solar panel system, whereby the output of the system can be improved as the temperature differences between the solar panels connected in series are as small as possible. Moreover, uniform cooling of the solar panel prevents breaking of components caused by temperature variation and extends the service life of the solar panels.

The mounting arrangement according to the invention enables mounting the solar panels directly on the cooling pipework. In this way the solar panels can be simply anchored in place using the cooling pipework in the system and there is no need for separate stands or anchoring devices. Moreover, thermal insulation materials can be mounted in place using the pipes in the cooling pipework arranged above their surface and no separate fasteners are needed. Thus, installing the solar panel system according to the invention is simple. Furthermore, the carbon footprint of a solar panel system according to the invention is significantly lower than that of conventionally used stands because very little steel and cement is needed.

Moreover, as the solar panel system according to the invention is arranged on the ground, forming a surface, cleaning of the system is easier to arrange and, for example, automate. For example, automated cleaning robots or similar can be used. Cleaning of the surface of the solar panels improves the efficiency of the solar panels.

### Short description of the drawings

In the following, the invention will be described in more detail with reference to the appended drawings, in which
- fig. 1: shows a cross-sectional principal view of a solar panel system according to an embodiment of the invention, which comprises solar panels and thermal insulation materials installed directly in the ground on the ground surface as well as a cooling pipework in the soil layer beneath the solar panels,
- fig. 2: shows a top view of a solar panel system according to an embodiment of the invention, wherein solar panels and thermal insulation materials alternate in the system, and
- fig. 3: illustrates an installation method of the thermal insulation materials according to one embodiment of the invention for building a solar panel system according to the invention.

### Detailed description of the invention

A solar panel system according to the invention comprises solar panels and thermal insulation materials arranged on the ground surface. A typical solar panel system according to the invention comprises several solar panels arranged on the ground. The number of solar panels may be several tens or even hundreds. The system according to the invention makes it possible to construct large solar power plants in an easy and simple way.

In the solar panel system according to the invention, thermal insulation material is arranged on at least some interspaces between the solar panels, whereby solar panels and thermal insulation materials alternate in the solar panel system. Several solar panels may be arranged next to each other, wherein thermal insulation materials are arranged in the interspaces between the groups of solar panels. Thermal insulation material can comprise a board or boards of thermal insulation material. Boards of thermal insulation material may be provided in one, two or more layers on top of each other. In an interspace between solar panels or groups of solar panels, one, two or more boards of thermal insulation material may be arranged next to each other. Alternatively, in the solar panel system according to the invention thermal insulation material comprises thermal insulation material foamed at the installation site. In this way, the thickness and width of the layer of thermal insulation material can vary freely.

Typically, the solar panels and thermal insulation materials are arranged on the ground surface substantially in parallel with the ground surface or can be installed slightly tilted relative to each other on the ground surface. In a typical embodiment of the invention, both the solar panels and the thermal insulation materials are on the same plane on the ground surface. In a typical embodiment of the invention, the solar panels and thermal insulation materials constitute a surface extending substantially in parallel with the ground surface, whereby the solar panels, or groups of solar panels, and thermal insulation materials alternate in the width and/or length direction of the surface. Typically, the solar panels and thermal insulation materials constitute a uniform surface. In an embodiment of the invention, the solar panels and thermal insulation materials are arranged in their respective rows in the system according to the invention. In this way, the thermal insulation materials constitute paths or passages between the rows of solar panels, whereby e.g. maintenance operations are easier to perform.

In the solar panel system according to the invention, the solar panels and thermal insulation materials are installed directly on the ground, whereby there is no space between the ground surface and the solar panels for air to flow on the back of the panels, but the cooling is arranged directly by using the soil and cooling pipework. In a typical embodiment of the invention, the solar panels and thermal insulation materials are substantially at ground level or slightly tilted relative to each other on the ground surface. In a typical embodiment of the invention, the planar surface of the solar panels is perpendicularly oriented towards the sky, but the solar panels may also be installed at an inclined angle directly on the ground so that no air space is left between the solar panels and the ground surface. The installation angle of the solar panels will depend on the geographical location of the solar power plant and the contours of the terrain on which the solar panel system is installed.

In a typical embodiment according to the invention, the solar panels and thermal insulation materials are installed directly on the ground. In an embodiment of the invention, the ground beneath the solar panels comprises sand in which the cooling pipework is installed. The sandy soil enables an easy installation of the cooling pipework. However, the soil layer may comprise any soil types which enable the installation of the cooling pipework in the soil layer. In the solar panel system according to the invention, the function of the soil layer is to act as a heating/cooling battery, and therefore, depending on the consistence of the soil layer, the heat absorption capacity of the soil may vary.

The cooling pipework for cooling the solar panels of the solar panel system according to the invention is arranged in the ground so that the cooling pipework comprises pipes arranged close to the ground surface at the point of location of the solar panels or mounted to the surface of the solar panel, which is facing the ground, and at the point of location of thermal insulation material the pipes are arranged substantially deeper in the ground, whereby the depth of the pipe belonging to the cooling pipework varies in the ground in the direction of the surface of the solar panel system, typically in the width- or length direction of the solar panel system, where solar panels and thermal insulation materials alternate. In the system according to the invention, cooling is based on the transfer of heat from the solar panels to the soil beneath them. When the depth of the pipe of the cooling pipework varies so that it is arranged close to the ground surface at the point of location of the solar panels or mounted to the surface of the solar panel facing the ground, and at the point of location of thermal insulation material deeper in the ground, the temperature differences between the solar panels in the system can be minimised. At the point of location of the solar panel, heat is transferred to the cooling medium in the pipe of the cooling pipework, and as the pipe is directed deeper in the ground at the point of location of the thermal insulation material, the heat from the cooling medium can be transferred to the soil. After this, the pipe rises again close to the ground surface at the point of location of the solar panels or it is mounted to the surface of the solar panel, which is facing the ground, whereby the cooled cooling medium absorbs heat into itself from the solar panel again. This way the pipe is arranged alternately at deeper underground and closer to the solar panel throughout the distance of the whole system, where solar panels and thermal insulation materials alternate. In this way, heat can be transferred from the solar panels deeper into the ground and/or distributed more evenly in the soil, thereby enhancing the cooling of the solar panel system. The temperature differences between the solar panels will level out as the cooling is more evenly distributed to each panel by using the cooling pipework.

In an embodiment of the invention, the pipes of the cooling pipework are arranged in contact with the surface of the solar panel, which is facing the ground, or the pipes are arranged on the ground a small distance apart from the solar panel beneath the solar panel. The pipe or pipes of the cooling pipework can be mounted to the lower surface of the solar panels by means of fastening devices or adhesives, or the pipe or pipes of the cooling pipework can be mounted to the thermal distribution boards or similar structures on the lower surface of the solar panels. In an embodiment of the invention, a thermal distribution board on which a cooling pipe is arranged, is arranged on the lower surface of the solar panel facing the ground, whereby a maximal contact to the panel is achieved. In this way, heat transfer from the solar panel to the cooling medium in the cooling pipe is enhanced. The thermal distribution board can be mounted mechanically or by means or adhesives, on the lower surface of the solar panel.

In an embodiment of the invention, the pipes of the cooling pipework are arranged in the ground a distance apart from the solar panel beneath the solar panel. Typically, the pipes of the cooling pipework are at the level of the ground surface, and solar panels are arranged in contact with the pipes. Suitable mass with good thermal conductivity can be arranged between the pipes of the cooling pipework and the solar panels, whereby heat transfer is enhanced.

In an embodiment of the invention, the cooling pipework of the solar panel system comprises several pipes side by side at a distance from each other, whereby the depth of a single pipe belonging to the cooling pipework in the ground varies. Typically, the depth varies in the width or length direction of the solar panel system where solar panels and thermal insulation materials alternate in the direction of the surface of the system. In an exemplary embodiment, several cooling pipes are arranged side by side in the length direction of the solar panel system, whereby the installation depth of the cooling pipework varies in the width direction of the system according to the solar panels and thermal insulation materials. In an embodiment of the invention, the cooling pipework of the solar panel system comprises two or more pipes side by side at a distance from each other at the point of location of one solar panel. Typically, there are one or more pipes of the cooling pipework at the point of location of each solar panel, and thus there can be several pipes in the system side by side, whereby the depth of the pipe of the cooling pipework alternates in the width or length direction of the solar panels system, where solar panels and thermal insulation materials alternate. This way the cooling of the solar panels can be arranged evenly for the whole area of the solar panel and especially of the solar panel system, and the temperature differences between the solar panels connected in series are as small as possible. Separate pipes of the cooling pipework can be connected to each other by using a manifold. Depending on the size of the solar panel system, the cooling pipework may comprise several separate cooling medium circulations.

The cooling pipework of the solar panel system is dimensioned according to the number of solar panels and thereby the size of the solar power plant. The dimensioning of the cooling pipes of the system are also influenced by the climate where the solar panel system is located, as well as the composition of the soil and thereby the thermal absorption capacity of the soil.

In an embodiment of the invention, the cooling pipework of the solar panel system comprises additionally pipes arranged to at least some of the thermal insulation materials on the ground surface, on the surface of the thermal insulation material on the ground surface and/or arranged to the thermal distribution boards on the surface of the thermal insulation materials on the ground surface. In this way, the cooling pipes are also arranged on the ground surface so that the pipes are typically arranged to the surface of the thermal insulation material. This way, the cooling medium in the cooling pipework can be arranged to also circulate in these pipes of the cooling pipework on the ground surface when heat is to be released from the cooling medium circulation. In a preferred embodiment, there are thermal distribution boards on top of the thermal insulation materials, whereby heat distribution can be enhanced. The thermal distribution boards are typically arranged to enhance thermal radiation, whereby heat can be efficiently released from the cooling pipework. The thermal distribution boards on the surface of the thermal insulation material can also comprise a reflective surface that reflects sunlight away from the structure.

In an embodiment of the invention, the pipes of the cooling pipework of the solar panel system, arranged at least to some of the thermal insulation materials on the ground surface and/or arranged to the thermal distribution boards on the surface of the thermal insulation materials on the ground surface, are also arranged underground at the point of location of the solar panels, whereby the depth of a single pipe belonging to the cooling pipework varies in the ground in the direction of the surface of the solar panel system, where solar panels and thermal insulation materials alternate.

Furthermore, a typical cooling pipework of the solar panel system according to the invention comprises control means for arranging a cooling medium circulation solely in the cooling pipework beneath the solar panels and the thermal insulation material, or for arranging a cooling medium circulation in both the cooling pipework underground and in the pipes of the cooling pipework on the thermal insulation material on the ground surface. Thus, in a solar panel system according to the invention, solar panels are cooled with a cooling method wherein the cooling medium is typically arranged to circulate solely in the cooling pipework beneath the solar panels and the thermal insulation materials when the solar panels are to be cooled during their operation. This way, heat is transferred from the solar panels to the ground underneath. When heat is to be released from the cooling medium circulation, the cooling medium is arranged to also circulate in the pipes of the cooling pipework in the thermal insulation materials on the ground surface and/or in pipes arranged on the thermal distribution boards on the surface of thermal insulation materials on the ground surface. Typically, the cooling medium is also arranged to circulate in the cooling pipes and/or in the thermal distribution boards on the thermal insulation materials on the ground surface when the outdoor temperature is lower than the temperature of the cooling fluid in the cooling pipework, typically during nighttime. In this way, the cooling medium can be made to release heat from the system, and the soil layer beneath the solar panels can be cooled. This way, the temperature of the solar panels can be lowered on the next day again, when heat is conveyed from the solar panels to the soil beneath the solar panels.

The cooling pipework is provided with a circulation of a cooling medium, such as water or air or another suitable agent such as some cooling medium. The cooling medium is circulated in the pipework. The system according to the invention further comprises the pumps and actuators required for arranging the cooling medium circulation. The cooling pipework comprises control means for arranging a cooling medium circulation solely in a cooling pipework beneath the solar panels and the thermal insulation materials, or in the cooling pipework beneath the thermal insulation material and the cooling pipes in the boards of thermal insulation material on the ground surface and/or the thermal distribution boards on top of the boards of thermal insulation material on the ground surface.

In an embodiment of the invention, a subterranean layer of thermal insulation material is arranged beneath the cooling pipework, whereby the cooling pipework is arranged between this layer of thermal insulation material and the solar panels, and the thermal insulation material arranged on the ground surface. In this way, the efficiency of the cooling can be enhanced.

In an embodiment of the invention, the boards of thermal insulation material comprise extruded polystyrene (XPS), expanded polystyrene (EPS), polyurethane (PIR/PUR), and/or polyphenol. Thermal insulation material can comprise a board or boards of thermal insulation material. Alternatively, in the solar panel system according to the invention, thermal insulation material comprises thermal insulation material foamed at the installation site, such as polyurethane.

In the solar panel system according to the invention, the solar panels are mounted to the cooling pipework. Typically, the solar panels are mounted to the cooling pipework arranged in the ground beneath the solar panels. The solar panels can be mounted directly to the cooling pipework by the lower surface of the solar panels or otherwise mounted to the cooling pipework. Respectively, the thermal insulation materials in the solar panel system according to the invention are mounted in place using the pipes of the cooling pipework running above their surface. In this way, the boards of thermal insulation material do not need to be separately mounted in place. The pipes of the cooling pipework also work as an anchoring structure for the solar panels and thermal insulation materials and no other structures for mounting the solar panels on the ground are needed. In the mounting arrangement according to the invention, for mounting the solar panels and thermal insulation materials in the solar panel system, the solar panels are mounted to the pipes of the cooling pipework and thermal insulation materials are mounted in place by the pipes of the pipework running above their surface.

A solar panel system according to the invention can be built by arranging cooling pipework in the ground and after that by installing the solar panels and thermal insulation materials and mounting the solar panels and thermal insulation materials to the pipes of the cooling pipework.

A solar panel system according to the invention can also be built by arranging cooling pipework of the solar panel system in the ground, arranging solar panels on the ground and mounting them on the pipes of the cooling pipework, and arranging thermal distribution boards by the pipes of the cooling pipework on the ground surface and after this, formulating a layer of thermal insulation material into the space between the boards of insulation material or similar structure and the ground surface. The order of installation of the solar panels in relation to forming layer of thermal insulation material may vary. In a preferred embodiment according to the invention, the thermal insulation material in the solar panel system is formed of insulation material foamed at the installation site into the space between the ground surface and the thermal distribution boards or similar structure, whereby the thermal distribution board is formed into a part of the thermal insulation layer. The insulation material to be foamed is, for example, polyurethane. This guarantees an easy and safe way to build a solar panel system as the thermal insulation material foamed at the site fills the space between the soil and the thermal distribution board and this way the thermal distribution boards are made as part of the structure. When thermal insulation material is foamed at the site, mould supports can be used on top of the thermal distribution boards in order to prevent the swelling of the thermal insulation material upwards excessively. At the point of location of cooling pipes, the swelling can be prevented also by anchoring the pipes of the cooling pipework into the ground. Other structures than thermal distribution boards can also be used on top of the thermal insulation material formed at the site, but thermal distribution boards are the best in terms of system performance. The purpose of the thermal distribution boards is to distribute heat to a wider area.

### Detailed description of the Figures

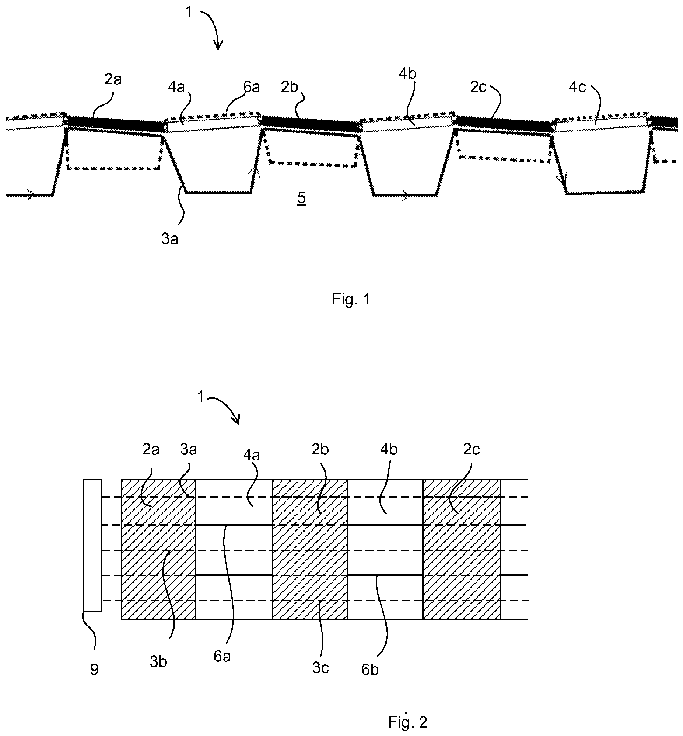

Figure 1 shows a solar panel system 1 according to an embodiment of the invention, comprising solar panels 2a, 2b, 2c installed directly on the ground, and thermal insulation materials 4a, 4b, 4c. Solar panels 2a, 2b, 2c and thermal insulation materials 4a, 4b, 4c alternate in the system. Figure 1 shows the pipes 3a and 6a belonging to the cooling pipework. The cooling pipework is arranged so that the cooling pipework comprises pipe 3a arranged close to the ground surface at the point of location of the solar panels 2a, 2b, 2c or attached to the surface of the solar panel 2a, 2b, 2c, which is facing the ground surface, and at the point of location of the thermal insulation material 4a, 4b, 4c pipe 3a is arranged substantially deeper in the ground 5, whereby the depth of pipe 3a of the cooling pipework varies in the ground in the direction of the surface of the solar panel system, where solar panels 2a, 2b, 2c and thermal insulation materials 4a, 4b, 4c alternate. Furthermore, the cooling pipework in figure 1 comprises pipe 6a arranged to the thermal insulation material 4a, 4b, 4c on the ground surface and/or arranged to the thermal distribution boards on the surface of the thermal insulation materials 4a, 4b, 4c on the ground. Pipe 6a of the cooling pipework is also arranged underground at the point of location of the solar panels 2a, 2b, 2c, whereby pipe 6a belonging to the cooling pipework is arranged alternately on the surface of the thermal insulation material and underground in the direction of the surface of the solar panel system, where solar panels and thermal insulation materials alternate.

In figure 1, the surface of the solar panel system is formed of solar panels 2a, 2b, 2c and thermal insulation materials 4a, 4b, 4c . The solar panels 2a, 2b, 2c and thermal insulation materials 4a, 4b, 4c are arranged slightly tilted relative to each other enabling water to drain more easily to the ground 5 between the solar panels and thermal insulation material.

Figure 2 shows a top view of a solar panel system 1 according to an embodiment of the invention, in which system solar panels 2a, 2b, 2c and boards of thermal insulation materials 4a, 4b alternate, forming solar panel rows and interposed passages of thermal insulation material.

Figure 2 illustrates that the cooling pipework of the solar panel system can comprise several pipes 3a, 3b, 3c side by side at a distance from each other, whereby the depth of a single pipe 3a, 3b, 3c belonging to the cooling pipework varies in the direction of the solar panel system, where solar panels and thermal insulation materials alternate. Respectively, in the system there can be pipes 6a, 6b at a distance from each other arranged to the thermal insulation materials 4a, 4b on the ground surface and/or arranged to the thermal distribution boards on the surface of the thermal insulation materials 4a, 4b, and also arranged underground at the point of location of the solar panels 2a, 2b, 2c, whereby the pipe is arranged alternately on the surface of the thermal insulation material and underground in the direction of the surface of the solar panel system, where solar panels and thermal insulation materials alternate. Pipes 3a and 6a can be arranged side by side substantially in the same place or they can be arranged at a distance from each other. The pipes 3a, 3b, 3c and 6a, 6b of the cooling pipework can be attached to each other by using a manifold 9 and cooling medium circulations in the pipes can be controlled by various actuators.

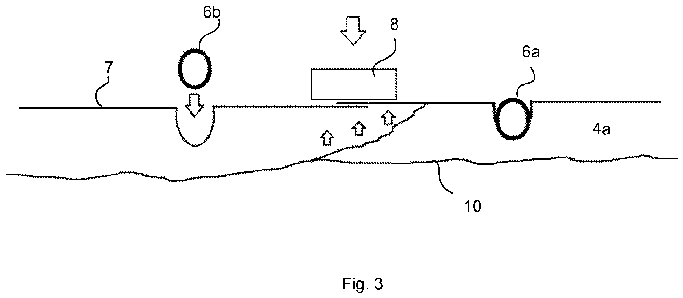

Figure 3 illustrates one way of constructing a solar panel system according to the invention. The easiest way to form the thermal insulation material 4a between the ground surface 10 and the thermal distribution boards 7 is using thermal insulation material foamed at the installation site, whereby the thermal distribution board 7 is formed into a part of the thermal insulation layer 4a. Arrows have been used in the figure to illustrate the way the thermal insulation material swells and fills the space between the ground surface 10 and the thermal distribution boards 7 forming the thermal insulation material 4a of the solar panel system. The thermal distribution boards 7 are passed between the cooling pipe 6a, 6b and the ground 5. Typically, the thermal distribution board is mounted to the pipe. Furthermore, mould supports 8 can be used to prevent the thermal insulation material from swelling upwards excessively. At the point of location of the pipes, a cooling pipe 6a, 6b already anchored in the ground prevents excessive swelling.

## Claims

1. A solar panels system (1), which comprises
- solar panels (2a, 2b, 2c) arranged in the ground (5) on the ground surface,
- thermal insulation materials (4a, 4b, 4c) arranged to at least some of the interspaces between the solar panels (2a, 2b, 2c) in the ground (5) on the ground surface wherein solar panels and thermal insulation materials alternate in the solar panel system in parallel with the ground surface, and
- a cooling pipework to cool the solar panels, which cooling pipework is arranged in the ground (5) beneath the solar panels (2a, 2b, 2c) and thermal insulation material (4a, 4b, 4c), which cooling pipework is provided with a cooling medium circulation,
**characterised in that** the cooling pipework is arranged in such a manner that the cooling pipework comprises pipes (3a, 3b, 3c) arranged close to the ground surface at the point of location of the solar panels or attached to the surface of the solar panel, which is facing the ground surface, and at the point of location of the thermal insulation material the pipes (3a, 3b, 3c) are arranged substantially deeper in the ground, whereby the depth of the pipe (3a, 3b, 3c) belonging to the cooling pipework varies in the ground in the direction of the surface of the solar panel system, where solar panels and thermal insulation materials alternate.

2. A solar panel system according to claim 1, **characterised in that** the pipes (3a, 3b, 3c) of the cooling pipework are mounted to the lower surface of the solar panels (2a, 2b, 2c) by means of fastening devices or adhesives, or the pipes (3a, 3b, 3c) of the cooling pipework are mounted to the thermal distribution boards or similar structures on the lower surface of the solar panels (2a, 2b, 2c).

3. A solar panel system according to claim 1, **characterised in that** the pipes (3a, 3b, 3c) of the cooling pipework are arranged on the ground a distance apart from the solar panel (2a, 2b, 2c), beneath the solar panel.

4. A solar panel system according to claim 3, **characterised in that** the solar panels (2a, 2b) are mounted to the pipes (3a, 3b, 3c) of the cooling pipework.

5. A solar panel system according to any of the preceding claims, **characterised in that** the cooling pipework comprises several pipes (3a, 3b, 3c) side by side at a distance from each other, whereby the depth of a single pipe (3a, 3b, 3c) belonging to the cooling pipework varies in the direction of the surface of the solar panel system, where solar panels and thermal insulation materials alternate.

6. A solar panel system according to claim 5, **characterised in that** the cooling pipework comprises two or more pipes (3a, 3b, 3c) side by side at a distance from each other at the point of location of one solar panel.

7. A solar panel system according to any of the preceding claims, **characterised in that** the cooling pipework comprises additionally pipes (6a, 6b) arranged to at least some of the thermal insulation materials (4a, 4b, 4c) on the ground surface and/or arranged to the thermal distribution boards or similar structures on the surface of the thermal insulation materials (4a, 4b, 4c) on the ground surface.

8. A solar panel system according to claim 7, **characterised in that** the pipes (6a, 6b) of the cooling pipework are also arranged underground at the point of location of the solar panels (2a, 2b, 2c), whereby a single pipe (6a, 6b) belonging to the cooling pipework is arranged alternately on the surface of the thermal insulation material and underground in the direction of the surface of the solar panel system, where solar panels and thermal insulation materials alternate.

9. The solar panel system according to any of the preceding claims, **characterised in that** the solar panels (2a, 2b) and the thermal insulation materials (4a, 4b) are installed directly on the ground.

10. A solar panel system according to any of the preceding claims, **characterised in that** the cooling pipework comprises control means for arranging a cooling medium circulation solely in the cooling pipework beneath the solar panels (2a, 2b, 2c) and the thermal insulation material (4a, 4b, 4c), or for the cooling pipework underground and in the cooling pipes on the thermal insulation material on the ground surface.

11. The solar panel system according to any of the preceding claims, **characterised in that** the thermal insulation material (4a, 4b) comprise extruded polystyrene (XPS), expanded polystyrene (EPS), polyurethane (PIR/PUR), and/or polyphenol.

12. The solar panel system according to any of the preceding claims, **characterised in that** the thermal insulation materials are mounted in place by using the pipes (6a, 6b) of the pipework running above their surface.

13. A solar panel system according to any of the preceding claims 7 to 12, **characterised in that** the thermal insulation material is formed of insulation material foamed at the installation site into the space between the ground surface and the thermal distribution boards (7) or similar structure whereby the thermal distribution board is formed into a part of the layer of thermal insulation material.

14. A solar panel system according to any of the preceding claims 1 to 12, **characterised in that** the thermal insulation material comprises a board or boards of thermal insulation material.

15. A mounting arrangement for mounting the solar panels and thermal insulation materials in the solar panels system (1), comprising
- solar panels (2a, 2b, 2c) arranged in the ground (5) on the ground surface,
- thermal insulation materials (4a, 4b, 4c) arranged to at least some of the interspaces between the solar panels (2a, 2b, 2c) in the ground (5) on the ground surface, wherein solar panels and thermal insulation materials alternate in the solar panel system, and
- a cooling pipework to cool the solar panels, which cooling pipework is arranged in the ground (5) beneath the solar panels (2a, 2b, 2c) and thermal insulation material (4a, 4b, 4c), which cooling pipework is provided with a cooling medium circulation,
**characterised in that** the solar panels (2a, 2b, 2c) are mounted to the pipes (3a, 3b, 3c) of the cooling pipework, and thermal insulation materials are mounted in place by the pipes (6a, 6b) of the pipework running above their surface.

## Patentansprüche

1. Solarmodulsystem (1), das umfasst:
- Solarmodule (2a, 2b, 2c), die im Erdreich (5) auf der Erdoberfläche angeordnet sind,
- Wärmedämmmaterialien (4a, 4b, 4c), die in mindestens einigen der Zwischenräume zwischen den Solarmodulen (2a, 2b, 2c) im Erdreich (5) auf der Erdoberfläche angeordnet sind, wobei sich Solarmodule und Wärmedämmmaterialien im Solarmodulsystem parallel zur Erdoberfläche abwechseln, und
- ein Kühlrohrsystem zum Kühlen die Solarmodule, wobei das Kühlrohrsystem im Erdreich (5) unterhalb der Solarmodule (2a, 2b, 2c) und des Wärmedämmmaterials (4a, 4b, 4c) angeordnet und mit einer Kühlmittelzirkulation versehen ist,
**dadurch gekennzeichnet, dass** das Kühlrohrsystem derart angeordnet ist, dass das Kühlrohrsystem Rohre (3a, 3b, 3c) umfasst, die am Standort der Solarmodule nahe der Erdoberfläche angeordnet oder an der der Erdoberfläche zugewandten Oberfläche des Solarmoduls befestigt sind, und dass die Rohre (3a, 3b, 3c) am Standort des Wärmedämmmaterials wesentlich tiefer im Erdreich angeordnet sind, wobei die Tiefe des zum Kühlrohrsystem gehörenden Rohrs (3a, 3b, 3c) im Erdreich in der Richtung entlang der Oberfläche des Solarmodulsystems, wo sich Solarmodule und Wärmedämmmaterialien abwechseln, variiert.

2. Solarmodulsystem nach Anspruch 1, **dadurch gekennzeichnet, dass** die Rohre (3a, 3b, 3c) des Kühlrohrsystems mittels Befestigungsvorrichtungen oder Klebstoffen an der Unterseite der Solarmoduls (2a, 2b, 2c) montiert sind oder dass die Rohre (3a, 3b, 3c) des Kühlrohrsystems an den Wärmeverteilungsplatten oder ähnlichen Strukturen an der Unterseite der Solarmoduls (2a, 2b, 2c) montiert sind.

3. Solarmodulsystem nach Anspruch 1, **dadurch gekennzeichnet, dass** die Rohre (3a, 3b, 3c) des Kühlrohrsystems auf dem Erdreich in einem Abstand vom Solarmodul (2a, 2b, 2c) unterhalb des Solarmoduls angeordnet sind.

4. Solarmodulsystem nach Anspruch 3, **dadurch gekennzeichnet, dass** die Solarmodule (2a, 2b) an den Rohren (3a, 3b, 3c) des Kühlrohrsystems montiert sind.

5. Solarmodulsystem nach einem der vorhergehenden Ansprüche, **dadurch gekennzeichnet, dass** das Kühlrohrsystem mehrere Rohre (3a, 3b, 3c) nebeneinander in einem Abstand voneinander umfasst, wobei die Tiefe eines einzelnen zum Kühlrohrsystem gehörenden Rohrs (3a, 3b, 3c) in der Richtung entlang der Oberfläche des Solarmodulsystems, in der sich Solarmodule und Wärmedämmmaterialien abwechseln, variiert.

6. Solarmodulsystem nach Anspruch 5, **dadurch gekennzeichnet, dass** das Kühlrohrsystem am Standort eines Solarmoduls zwei oder mehr Rohre (3a, 3b, 3c) nebeneinander in einem Abstand voneinander umfasst.

7. Solarmodulsystem nach einem der vorhergehenden Ansprüche, **dadurch gekennzeichnet, dass** das Kühlrohrsystem zusätzlich Rohre (6a, 6b) umfasst, die an mindestens einigen der Wärmedämmmaterialien (4a, 4b, 4c) auf der Erdoberfläche angeordnet und/oder an Wärmeverteilungsplatten oder ähnlichen Strukturen auf der Oberfläche der Wärmedämmmaterialien (4a, 4b, 4c) auf der Erdoberfläche angeordnet sind.

8. Solarmodulsystem nach Anspruch 7, **dadurch gekennzeichnet, dass** die Rohre (6a, 6b) des Kühlrohrsystems auch am Standort der Solarmodule (2a, 2b, 2c) unterirdisch angeordnet sind, wobei ein einzelnes zum Kühlrohrsystem gehörendes Rohr (6a, 6b) abwechselnd auf der Oberfläche des Wärmedämmmaterials und unterirdisch angeordnet ist in der Richtung entlang der Oberfläche des Solarmodulsystems, wo sich Solarmodule und Wärmedämmmaterialien abwechseln.

9. Solarmodulsystem nach einem der vorhergehenden Ansprüche, **dadurch gekennzeichnet, dass** die Solarmodule (2a, 2b) und die Wärmedämmmaterialien (4a, 4b) direkt auf dem Erdreich installiert sind.

10. Solarmodulsystem nach einem der vorhergehenden Ansprüche, **dadurch gekennzeichnet, dass** das Kühlrohrsystem Steuermittel zum Herstellen einer Kühlmittelzirkulation ausschließlich im Kühlrohrsystem unterhalb der Solarmodule (2a, 2b, 2c) und des Wärmedämmmaterials (4a, 4b, 4c) oder für das unterirdische Kühlrohrsystem und in den Kühlrohren auf dem Wärmedämmmaterial auf der Erdoberfläche umfasst.

11. Solarmodulsystem nach einem der vorhergehenden Ansprüche, **dadurch gekennzeichnet, dass** die Wärmedämmmaterialien (4a, 4b) extrudiertes Polystyrol (XPS), expandiertes Polystyrol (EPS), Polyurethan (PIR/PUR) und/oder Polyphenol umfassen.

12. Solarmodulsystem nach einem der vorhergehenden Ansprüche, **dadurch gekennzeichnet, dass** die Wärmedämmmaterialien mithilfe der über ihre Oberfläche verlaufenden Rohre (6a, 6b) des Rohrsystems an ihrem Platz montiert sind.

13. Solarmodulsystem nach einem der vorhergehenden Ansprüche 7 bis 12, **dadurch gekennzeichnet, dass** das Wärmedämmmaterial aus Dämmmaterial gebildet ist, das an der Installationsstelle in den Raum zwischen der Erdoberfläche und den Wärmeverteilern (7) oder einer ähnlichen Struktur eingeschäumt ist, wobei die Wärmeverteilungsplatte zu einem Teil der Wärmedämmmaterialschicht geformt wird.

14. Solarmodulsystem nach einem der vorhergehenden Ansprüche 1 bis 12, **dadurch gekennzeichnet, dass** das Wärmedämmmaterial eine Platte oder Platten aus Wärmedämmmaterial umfasst.

15. Montageanordnung zum Montieren der Solarmoduls und Wärmedämmmaterialien in dem Solarmodulsystem (1), umfassend
- Solarmodule (2a, 2b, 2c), die im Erdreich (5) auf der Erdoberfläche angeordnet sind,
- Wärmedämmmaterialien (4a, 4b, 4c), die in mindestens einigen der Zwischenräume zwischen den Solarmodulen (2a, 2b, 2c) im Erdreich (5) auf der Erdoberfläche angeordnet sind, wobei sich Solarmodule und Wärmedämmmaterialien im Solarmodulsystem abwechseln, und
- ein Kühlrohrsystem zum Kühlen die Solarmodule, wobei das Kühlrohrsystem im Erdreich (5) unterhalb der Solarmodule (2a, 2b, 2c) und des Wärmedämmmaterials (4a, 4b, 4c) angeordnet und mit einer Kühlmittelzirkulation versehen ist,
**dadurch gekennzeichnet, dass** die Solarmodule (2a, 2b, 2c) an den Rohren (3a, 3b, 3c) des Kühlrohrsystems montiert sind und die Wärmedämmmaterialien durch die über ihre Oberfläche verlaufenden Rohre (6a, 6b) des Rohrsystems an ihrem Platz montiert sind.

## Revendications

1. Système de panneaux solaires (1), qui comprend
- des panneaux solaires (2a, 2b, 2c) disposés dans le sol (5) à la surface du sol,
- des matériaux d'isolation thermique (4a, 4b, 4c) disposés dans au moins certains des espaces entre les panneaux solaires (2a, 2b, 2c) dans le sol (5) à la surface du sol, les panneaux solaires et les matériaux d'isolation thermique alternant dans le système de panneaux solaires parallèlement à la surface du sol, et
- un réseau de tuyaux de refroidissement destiné à refroidir les panneaux solaires, lequel réseau de tuyaux de refroidissement est disposé dans le sol (5) sous les panneaux solaires (2a, 2b, 2c) et le matériau d'isolation thermique (4a, 4b, 4c), lequel réseau de tuyaux de refroidissement est pourvu d'une circulation d'un fluide de refroidissement,
**caractérisé en ce que** le réseau de tuyaux de refroidissement est disposé de telle manière qu'il comprend des tuyaux (3a, 3b, 3c) disposés à proximité de la surface du sol à l'emplacement des panneaux solaires ou fixés à la surface du panneau solaire qui fait face à la surface du sol, et qu'à l'emplacement du matériau d'isolation thermique, les tuyaux (3a, 3b, 3c) sont disposés sensiblement plus profondément dans le sol, de sorte que la profondeur du tuyau (3a, 3b, 3c) appartenant au réseau de tuyaux de refroidissement varie dans le sol suivant la direction de la surface du système de panneaux solaires dans laquelle les panneaux solaires et les matériaux d'isolation thermique alternent.

2. Système de panneaux solaires selon la revendication 1, **caractérisé en ce que** les tuyaux (3a, 3b, 3c) du réseau de tuyaux de refroidissement sont fixés à la surface inférieure des panneaux solaires (2a, 2b, 2c) au moyen de dispositifs de fixation ou d'adhésifs, ou **en ce que** les tuyaux (3a, 3b, 3c) du réseau de tuyaux de refroidissement sont fixés à des plaques de répartition thermique ou à des structures similaires sur la surface inférieure des panneaux solaires (2a, 2b, 2c).

3. Système de panneaux solaires selon la revendication 1, **caractérisé en ce que** les tuyaux (3a, 3b, 3c) du réseau de tuyaux de refroidissement sont disposés sur le sol à une certaine distance du panneau solaire (2a, 2b, 2c), sous le panneau solaire.

4. Système de panneaux solaires selon la revendication 3, **caractérisé en ce que** les panneaux solaires (2a, 2b) sont fixés aux tuyaux (3a, 3b, 3c) du réseau de tuyaux de refroidissement.

5. Système de panneaux solaires selon l'une quelconque des revendications précédentes, **caractérisé en ce que** le réseau de tuyaux de refroidissement comprend plusieurs tuyaux (3a, 3b, 3c) côte à côte à distance les uns des autres, de sorte que la profondeur d'un seul tuyau (3a, 3b, 3c) appartenant au réseau de tuyaux de refroidissement varie suivant la direction de la surface du système de panneaux solaires dans laquelle les panneaux solaires et les matériaux d'isolation thermique alternent.

6. Système de panneaux solaires selon la revendication 5, **caractérisé en ce que** le réseau de tuyaux de refroidissement comprend deux tuyaux (3a, 3b, 3c) ou plus côte à côte à distance les uns des autres à l'emplacement d'un panneau solaire.

7. Système de panneaux solaires selon l'une quelconque des revendications précédentes, **caractérisé en ce que** le réseau de tuyaux de refroidissement comprend en outre des tuyaux (6a, 6b) disposés sur au moins certains des matériaux d'isolation thermique (4a, 4b, 4c) à la surface du sol et/ou disposés sur les plaques de répartition thermique ou des structures similaires sur la surface des matériaux d'isolation thermique (4a, 4b, 4c) à la surface du sol.

8. Système de panneaux solaires selon la revendication 7, **caractérisé en ce que** les tuyaux (6a, 6b) du réseau de tuyaux de refroidissement sont également disposés sous terre à l'emplacement des panneaux solaires (2a, 2b, 2c), de sorte qu'un seul tuyau (6a, 6b) appartenant au réseau de tuyaux de refroidissement est disposé alternativement sur la surface du matériau d'isolation thermique et sous terre suivant la direction de la surface du système de panneaux solaires dans laquelle les panneaux solaires et les matériaux d'isolation thermique alternent.

9. Système de panneaux solaires selon l'une quelconque des revendications précédentes, **caractérisé en ce que** les panneaux solaires (2a, 2b) et les matériaux d'isolation thermique (4a, 4b) sont installés directement sur le sol.

10. Système de panneaux solaires selon l'une quelconque des revendications précédentes, **caractérisé en ce que** le réseau de tuyaux de refroidissement comprend des moyens de commande pour établir une circulation d'un fluide de refroidissement uniquement dans le réseau de tuyaux de refroidissement sous les panneaux solaires (2a, 2b, 2c) et le matériau d'isolation thermique (4a, 4b, 4c), ou pour le réseau de tuyaux de refroidissement sous terre et dans les tuyaux de refroidissement sur le matériau d'isolation thermique à la surface du sol.

11. Système de panneaux solaires selon l'une quelconque des revendications précédentes, **caractérisé en ce que** les matériaux d'isolation thermique (4a, 4b) comprennent du polystyrène extrudé (XPS), du polystyrène expansé (EPS), du polyuréthane (PIR/PUR) et/ou du polyphénol.

12. Système de panneaux solaires selon l'une quelconque des revendications précédentes, **caractérisé en ce que** les matériaux d'isolation thermique sont fixés en place au moyen des tuyaux (6a, 6b) du réseau de tuyaux passant au-dessus de leur surface.

13. Système de panneaux solaires selon l'une quelconque des revendications précédentes 7 à 12, **caractérisé en ce que** le matériau d'isolation thermique est formé d'un matériau isolant moussé sur le site d'installation dans l'espace entre la surface du sol et les plaques de répartition thermique (7) ou une structure similaire, de sorte que la plaque de répartition thermique fait partie de la couche de matériau d'isolation thermique.

14. Système de panneaux solaires selon l'une quelconque des revendications précédentes 1 à 12, **caractérisé en ce que** le matériau d'isolation thermique comprend une ou plusieurs plaques de matériau d'isolation thermique.

15. Agencement de montage destiné au montage des panneaux solaires et des matériaux d'isolation thermique dans le système de panneaux solaires (1), comprenant
- des panneaux solaires (2a, 2b, 2c) disposés dans le sol (5) à la surface du sol,
- des matériaux d'isolation thermique (4a, 4b, 4c) disposés dans au moins certains des espaces entre les panneaux solaires (2a, 2b, 2c) dans le sol (5) à la surface du sol, les panneaux solaires et les matériaux d'isolation thermique alternant dans le système de panneaux solaires, et
- un réseau de tuyaux de refroidissement destiné à refroidir les panneaux solaires, lequel réseau de tuyaux de refroidissement est disposé dans le sol (5) sous les panneaux solaires (2a, 2b, 2c) et le matériau d'isolation thermique (4a, 4b, 4c), lequel réseau de tuyaux de refroidissement est pourvu d'une circulation d'un fluide de refroidissement,
**caractérisé en ce que** les panneaux solaires (2a, 2b, 2c) sont fixés aux tuyaux (3a, 3b, 3c) du réseau de tuyaux de refroidissement, et que les matériaux d'isolation thermique sont fixés en place par les tuyaux (6a, 6b) du réseau de tuyaux passant au-dessus de leur surface.
